# FASCICULE DE BREVET EUROPEEN

(11) **EP 4 514 761 B1**
(45) Date de publication et mention de la délivrance du brevet: **21.01.2026**
(21) Numéro de dépôt: 23722511.5
(22) Date de dépôt: 25.04.2023
(51) Int. Cl.: C03C 17/34

(54) **ARTICLE VERRIER, SON PROCÉDÉ D'OBTENTION ET VITRAGE AUTOMOBILE COMPRENANT UN TEL ARTICLE VERRIER**
GLASARTIKEL, VERFAHREN ZUR HERSTELLUNG DAVON UND KRAFTFAHRZEUGVERGLASUNGSEINHEIT MIT SOLCH EINEM GLASARTIKEL
GLASS ARTICLE, METHOD FOR OBTAINING SAME AND MOTOR VEHICLE GLAZING UNIT COMPRISING SUCH A GLASS ARTICLE

(30) Priorité: 28.04.2022 FR 2204030
(43) Date de publication de la demande: 05.03.2025
(73) Titulaire: Saint-Gobain Sekurit France, 60150 Thourotte (FR)
(72) Inventeur: BACHAROUCHE, Jalal, 92400 Courbevoie (FR); JAMART, Juliette, 92400 Courbevoie (FR); CHAHBOUNE, Kamel, 92400 Courbevoie (FR); LIGI, Sylvain, 92400 Courbevoie (FR)
(74) Mandataire: Saint-Gobain Recherche
(86) Numéro de dépôt international: PCT/EP2023/060847
(87) Numéro de publication internationale: WO 2023/208956

(56) Documents cités:
- EP-A1- 3 730 841
- WO-A1-2005/068385
- WO-A1-2020/064940

## Description

### Technique antérieure

L'invention se rapporte au domaine des vitrages, notamment des vitrages de véhicules automobiles, par exemple des pare-brise, lunettes arrières, latérales, custodes ou encore des toits.

Les vitrages pour automobile doivent répondre à un grand nombre d'exigences, en termes aussi bien de sécurité que de confort.

De tels vitrages sont souvent des vitrages monolithiques, comprenant une seule feuille de verre trempée thermiquement.

Alternativement, et pour améliorer la sécurité ainsi que le confort acoustique, un nombre croissant de vitrages sont des vitrages feuilletés, c'est-à-dire des vitrages dans lesquels deux feuilles de verre sont liées adhésivement au moyen d'un intercalaire de feuilletage. Ce dernier permet en particulier de retenir les éclats de verre en cas de casse, mais apporte aussi d'autres fonctionnalités, en particulier en termes de résistance à l'effraction ou d'amélioration des propriétés acoustiques.

Des couches d'émail, normalement noir et opaque, sont souvent déposées sur une partie du vitrage, généralement sous forme d'une bande périphérique destinée à protéger contre le rayonnement ultraviolet les joints polymériques servant à la fixation et au positionnement du vitrage dans les baies de la carrosserie. Elles permettent en outre de dissimuler lesdits joints ainsi que d'autres éléments situés sur le vitrage tels que les connexions électriques ou les bandes collectrices, destinées à collecter l'électricité.

Un émail est une couche minérale formée par cuisson d'une composition d'émail comprenant une fritte de verre, notamment de verre de borosilicate de bismuth, et des pigments.

Dans un souci de différencier les véhicules par leur design, les constructeurs automobiles sont aussi à la recherche de décors originaux, notamment de décors visibles de l'extérieur du véhicule, sans nuire toutefois à la sécurité mais aussi au confort lumineux et thermique des occupants. Des décors permettant de créer une zone de transition douce entre la carrosserie et le clair de vue sont notamment recherchés.

Les matériaux dichroïques sont connus pour leur propriété de réflexion d'un rayonnement lumineux incident en rayonnements réfléchis de différentes longueurs d'onde.

Par exemple, dans le document US 2010/0330339 A1, des verres décoratifs sont produits par le dépôt d'un film dichroïque présentant une surface irrégulière. Le film réfléchi ou transmet des rayonnements lumineux de couleurs différentes selon des motifs définis par l'irrégularité de la surface qu'il recouvre, son design et l'angle d'observation.

CN 102725663 B décrit un revêtement dichroïque qui peut être appliqué à un élément en verre d'un appareil électronique afin d'en améliorer l'esthétisme. A ces fins, plusieurs méthodes peuvent être mises en œuvre, notamment le dépôt d'une couche d'encre sur le verre en plus d'un matériau dichroïque.

Alternativement, le document US 6,531,230 B1 propose un film polymérique comprenant des couches aux propriétés optiques différentes, permettant d'obtenir des miroirs colorés et des polariseurs. Ce film est caractérisé par une variation de couleur particulièrement uniforme en fonction de l'angle d'observation.

En outre, les documents WO 2005/068385, WO 2020/064940 et EP 3 730 841 décrivent des revêtements comprenant plusieurs couches d'émail pigmenté.

### Exposé de l'invention

La présente invention propose donc, afin d'obtenir des décors permettant de créer une zone de transition douce entre la carrosserie et le clair de vue dans le domaine du vitrage automobile, de mettre en œuvre de tels matériaux.

Afin de décrire une telle transition, on parle d'effet « seamless ».

A cet effet, et selon un premier aspect, l'invention concerne un article verrier comprenant :
- un substrat de verre,
- une première couche recouvrant au moins partiellement le substrat de verre et comprenant au moins un pigment choisi parmi les pigments dichroïques et les pigments métalliques, la première couche comprenant de 5 % à 15 % en poids de pigment(s) choisi(s) parmi les pigments métalliques et dichroïques, par rapport au poids total de la première couche, et
- une deuxième couche recouvrant au moins partiellement le substrat de verre, recouvrant sensiblement toute la surface de la première couche et comprenant au moins un pigment noir.

Dans ledit article verrier, différentes colorations sont obtenues en fonction des pigments métalliques et/ou dichroïques utilisés. La coloration, et donc les pigments utilisés, sont choisis en fonction de la couleur de la carrosserie avec laquelle l'effet « seamless » est souhaité.

Un tel article verrier selon l'invention trouve son intérêt, notamment, dans le fait qu'il permet également d'obtenir différentes colorations en fonction de l'angle d'observation de l'article verrier. Cette caractéristique, liée à la première couche d'un article verrier selon l'invention, permet de mieux accorder le vitrage avec une carrosserie. En effet, les carrosseries dans l'industrie automobile étant également métallisées, leur coloration dépend également d'un angle d'observation.

De plus, cette première couche permet également de donner un aspect métallisé au vitrage, ce qui participe à l'effet « seamless » obtenu avec la carrosserie d'un véhicule.

Dans un mode de réalisation de l'invention, on cherche à obtenir cet effet au niveau d'un pare-brise avant ou d'une lunette arrière d'un véhicule, au contact d'un élément de carrosserie, afin d'atténuer la transition visuelle entre ces deux éléments du véhicule.

Dans un autre mode de réalisation, un article verrier selon l'invention est utilisé en remplacement de pièces métalliques usuellement utilisées dans les véhicules au niveau des interfaces entre les vitrages et la carrosserie. On trouve notamment de telles pièces entre les vitres latérales et les portières ou entre les vitres de custodes et les custodes. Un article verrier selon l'invention, utilisé en tant que vitre latérale ou de custode, permet donc de s'affranchir desdites pièces métalliques dans un véhicule, en occupant l'espace où celles-ci se trouvent habituellement afin d'obtenir un effet « seamless » entre la carrosserie et le vitrage du véhicule.

Le substrat de verre convenant pour un article verrier selon l'invention peut être une feuille de verre minéral, éventuellement trempée thermiquement ou renforcée chimiquement, en particulier choisie parmi les feuilles de verre flotté, sodocalcique, aluminosilicate et borosilicate.

De préférence, le substrat de verre dans un article verrier selon l'invention est une feuille de verre silico-sodo-calcique.

Les pigments à effet dichroïque, dits « pigments dichroïques » sont connus de l'homme du métier et décrits par exemple dans le brevet EP 0 736 073 B1, se référant aux brevets US 4,434,010 ; US 4,704,356 ; US 4,779,898 ; US 4,838,648 ; US 4,930,866 ; US 5,059,245 ; US 5,135,812 ; US 5,171,363 et US 5,214,530.

Ces pigments présentent généralement une structure interférentielle comprenant au moins une couche réfléchissante métallique et au moins une couche transparente diélectrique. Ladite structure interférentielle produit l'effet dichroïque, typiquement *via* un empilement diélectrique de couches présentant différents indices de réfraction ou par la combinaison de couche(s) transparente(s) diélectrique(s) et de couche(s) métallique(s) semi-opaque(s).

La couche réfléchissante métallique est généralement constituée d'aluminium, mais peut également être formée d'or, de cuivre ou d'argent.

La couche métallique semi-opaque peut être formée de métaux tels que le chrome, le nickel ou d'un alliage à base de nickel, de chrome et de fer.

La couche transparente diélectrique peut être formée de silice, de fluorure de magnésium ou d'oxyde d'aluminium.

L'épaisseur des couches varie quant à elle en fonction des caractéristiques souhaitées pour le pigment.

Des pigments dichroïques convenant à l'invention peuvent être, par exemple, les pigments Ocean Blue Artikel 201003 et/ou Magic Saphire Artikel 201006 commercialisés par la société Ceramic Colors.

La deuxième couche d'un article verrier selon l'invention remplit plusieurs rôles. Elle permet à la fois une protection mécanique, en particulier une protection anti-rayures, et un maintien de la première couche. En outre, cette deuxième couche comprenant un pigment noir, elle provoque donc une accentuation par contraste de l'effet dichroïque de la première couche.

Dans le présent texte, le terme « recouvrant » signifie un contact physique entre les couches recouverte et recouvrante. Ainsi, au sens de l'invention, la première couche est au contact du substrat de verre et la deuxième couche est au contact à la fois du substrat de verre et de la première couche.

Ainsi, dans un mode de réalisation préféré, l'article verrier selon l'invention ne comprend aucune couche optiquement active entre le substrat de verre et la première couche, ou lorsque la deuxième couche est au contact du substrat de verre, entre le substrat de verre et la deuxième couche.

Dans un mode de réalisation particulier de l'invention, la première couche comprend au moins un pigment choisi parmi les pigments dichroïques.

Dans un autre mode de réalisation de l'invention, la première couche comprend au moins un pigment choisi parmi les pigments métalliques.

De tels pigments sont par exemple choisis parmi les pigments à base de mica et de titane rutile tels que ceux vendus sous les références Iriodin et Xirallic par la société Merck.

Une première couche convenant à l'invention peut par exemple être obtenue par l'ajout de pigments convenant à l'invention dans une composition d'émail transparente.

Une première couche contenant de tels pigments peut également, par exemple, être obtenue à partir des compositions d'émaux vendus sous les références 154030, 164030, 174030, 194030 et 134030 et de préférence 194030 et 134030 par la société Vibrantz. Ces compositions correspondent respectivement à des colorations métalliques argentée, cuivrée, rouge, argentée mat et dorée.

La première couche d'un article verrier selon l'invention peut comprendre un mélange de pigments dichroïques et de pigments métalliques.

Une première couche convenant à l'invention peut contenir de 7 % à 13 % en poids ; et de préférence 10% en poids de pigment(s) choisi(s) parmi les pigments métalliques et dichroïques, par rapport au poids total de la première couche.

Une première couche contenant au moins 5 % en poids de pigment(s) convenant à l'invention permet l'obtention d'un effet « seamless » particulièrement satisfaisant.

Une première couche contenant au plus 15 % en poids de pigment(s) convenant à l'invention présente une viscosité particulièrement adaptée pour une impression, notamment par sérigraphie, sur un substrat de verre.

Les pigments compris dans la première couche d'un article verrier selon l'invention ont généralement une taille comprise de 5 à 40 µm. Une taille de particules jusqu'à 120 µm peut également convenir à l'invention, notamment de manière à renforcer l'effet visuel produit par le pigment, mais nécessite l'utilisation d'écrans adaptés, avec une ouverture de maille élevée, pour mettre en œuvre un procédé de sérigraphie tel que décrit ci-dessous.

La première couche d'un vitrage selon l'invention peut être tramée.

Le tramage de la première couche permet, lors de l'installation du vitrage sur un véhicule, l'observation de la deuxième couche, noire, au travers des ajours ménagés dans la première couche. Le contraste entre les deux couches renforce l'esthétisme du vitrage, notamment par l'accentuation de l'effet dichroïque.

Dans un article verrier selon l'invention, l'épaisseur des première et deuxième couche peut être comprise de 1 µm à 100 µm, en particulier de 10 µm à 80 µm et de préférence de 15 µm à 50 µm.

Les première et deuxième couche peuvent en outre comprendre une fritte de verre.

Dans un mode de réalisation particulier, ces couches correspondent à des émaux, comprenant une fritte de verre, des pigments et un médium organique avant cuisson puis des pigments et une matrice vitreuse obtenue par fusion de la fritte de verre après cuisson. Par « émail » on entend désigner la couche aussi bien avant qu'après cuisson. Ces émaux sont typiquement obtenus par cuisson au-dessus de 500 °C.

La fritte de verre et/ou la matrice vitreuse est de préférence constituée d'un verre de borosilicate de zinc et/ou de bismuth. De préférence, la fritte de verre et/ou la matrice vitreuse est du silicate de bismuth.

Dans la deuxième couche, l'au moins un pigment noir est en particulier à base d'un oxyde ou d'un sulfure, de fer, de chrome, de cuivre, de cobalt et/ou de manganèse. De préférence, le pigment noir est du chromate de cuivre.

Selon un autre de ses aspects, la présente invention concerne un procédé d'obtention d'un article verrier tel que défini ci-dessus, comprenant
- une étape d'impression de la première couche sur le substrat de verre ; et
- une étape d'impression de la deuxième couche sur la première couche et le substrat de verre.

Dans un mode de réalisation de l'invention, les étapes d'impression sont réalisées par sérigraphie et/ou par impression digitale.

Un procédé de sérigraphie comprend le dépôt, notamment à l'aide d'un racle, d'un liquide pâteux sur un substrat au travers de mailles d'un écran de sérigraphie. Les mailles de l'écran sont obturées dans la partie correspondant aux zones du substrat qui doivent rester nues, de sorte que la pâte ne peut passer au travers de l'écran que dans les zones à imprimer, selon un motif prédéfini. L'obturation sélective des mailles est donc faite selon le négatif du motif à imprimer.

Cette obturation sélective est généralement réalisée par application sur l'écran d'une résine photoréticulable puis par insolation, au moyen d'un rayonnement ultraviolet, des parties de l'écran à obturer.

L'insolation sélective est par exemple réalisée grâce à une diapositive comprenant un support transparent, typiquement en polyester, revêtu d'une encre opaque aux ultraviolets déposée selon le motif à imprimer.

La maille de l'écran est choisie selon la viscosité et la tension de surface de la pâte ainsi que selon l'épaisseur désirée pour la couche résultante du dépôt par sérigraphie.

Les écrans utilisés pour la sérigraphie des première et deuxième couches peuvent comprendre de 30 à 100 fils par centimètre, pour un diamètre de fils compris de 30 à 60 µm.

Les écrans utilisés pour la sérigraphie de la première couche doivent présenter une ouverture de maille relativement grande, ce qui se traduit par un nombre de fils maximum. Les écrans utilisés pour la sérigraphie de la première couche peuvent donc comprendre jusqu'à 75, en particulier jusqu'à 70 et de préférence 68 fils par centimètre.

En particulier, les écrans utilisés pour la première couche comprennent de 40 à 70 fils par centimètre, pour un diamètre de fils compris de 40 à 60 µm.

De préférence, les écrans utilisés pour la première couche comprennent 68 fils par centimètre, pour un diamètre de fils de 55 µm.

Pour obtenir une ouverture de maille encore plus élevée et prévenir toute obturation du tissu, de manière encore préférée, les écrans utilisés pour la première couche comprennent jusqu'à 49 fils par centimètre.

Les écrans utilisés pour la sérigraphie de la deuxième couche doivent permettre un dépôt suffisamment épais pour recouvrir la première couche et encapsuler complètement les pigments contenus dans cette première couche.

En particulier, les écrans utilisés pour la deuxième couche comprennent de 80 à 100 fils par centimètre, pour un diamètre de fils compris de 30 à 50 µm.

De préférence, les écrans utilisés pour la deuxième couche comprennent 90 fils par centimètre, pour un diamètre de fils de 40 µm.

Dans un autre mode de réalisation de l'invention, les écrans utilisés pour la deuxième couche comprennent de 45 à 65 fils par centimètre, pour un diamètre de fils compris de 55 à 75 µm. De préférence, dans cet autre mode de réalisation, les écrans utilisés pour la deuxième couche comprennent 55 fils par centimètre, pour un diamètre de fils de 64 µm

Selon encore un autre de ses aspects, la présente invention se rapporte à un vitrage automobile comprenant un article verrier selon l'invention.

Dans un vitrage selon l'invention, la surface sur laquelle s'étendent les première et deuxième couches est appelée « zone émaillée ».

La zone émaillée se présente en particulier sous la forme d'une bande périphérique. C'est-à-dire, une bande renfermée sur elle-même qui, de chaque point de l'article verrier selon l'invention, s'étend vers l'intérieur de l'article verrier sur une certaine largeur, typiquement comprise entre 1 et 20 cm.

La partie restante du vitrage automobile selon l'invention, appelée « zone non-émaillée » est généralement non revêtue.

Alternativement, elle peut être revêtue d'un empilement de couches minces, par exemple comprenant une couche à faible émissivité, notamment à base d'argent ou à base d'un oxyde transparent électro-conducteur tel que l'oxyde d'indium et d'étain ou les oxydes d'étain ou de zinc dopés.

Dans un mode de réalisation particulier, le vitrage automobile selon l'invention est un vitrage feuilleté ou trempé.

Lorsque le vitrage selon l'invention est feuilleté ou trempé, les première et deuxième couches peuvent avantageusement être déposées sur la face intérieure de ce vitrage.

Par « face intérieure » on entend désigner toute face d'une feuille de verre du vitrage, disposée en regard de l'habitacle d'un véhicule. Par exemple, pour un vitrage trempé, il peut s'agir de la face au contact de l'intérieur de l'habitacle du véhicule, ou, dans le cas d'un vitrage feuilleté, la face interne du verre extérieur, c'est-à-dire celle se situant du côté de l'intercalaire de feuilletage.

Lorsque le vitrage automobile selon l'invention est trempé, la trempe de celui-ci est avantageusement réalisée simultanément à la cuisson des première et deuxième couches.

Le vitrage automobile selon l'invention peut être bombé.

Le substrat de verre sur lequel les première et deuxième couches sont déposées est généralement plat. Celui-ci est ensuite de préférence bombé et possède donc une forme bombée dans le vitrage automobile selon l'invention.

Le bombage du vitrage a pour effet d'augmenter l'impression « seamless » pour un observateur. En effet, par rapport à un verre plat ou avec un arrondi moins prononcé, l'observation depuis un même point résulte en une plus grande gamme d'angles d'observation et ainsi une plus grande gamme de coloration du vitrage, puisque, comme il l'est démontré dans les exemples ci-dessous celle-ci varie selon l'angle d'observation du vitrage.

Lorsque le vitrage automobile selon l'invention est bombé, le bombage de celui-ci est avantageusement réalisé simultanément à la cuisson des première et deuxième couches.

Le vitrage selon l'invention peut comprendre une zone émaillée comprise de 2 à 25 %, en particulier de 3 à 20 % et de préférence de 5 à 15 % de la surface de sa face revêtue par les première et deuxième couches.

### Exemples

Le tableau ci-dessous présente les configurations qui ont été réalisées et indique notamment le pourcentage en masse de pigments dans une couche par rapport à la masse totale de pigments dans cette couche.

**[Tableau 1]**

| | | Ex. 1 | Ex. 2 | Ex. 3 | Ex. 4 | Ex. 5 | Ex. 6 |
|---|---|---|---|---|---|---|---|
| Première couche Mesh 68.55 | Ocean blue Artikel 201003 de la société Ceramic Colors (%) | 100 | - | 50 | - | - | - |
| | Magic Saphire Artikel 201006 de la société Ceramic Colors (%) | - | 100 | 50 | - | - | - |
| | 194030 de la société Vibrantz (%) | - | - | - | 100 | - | 50 |
| | 134030 de la société Vibrantz (%) | - | - | - | - | 100 | 50 |
| | Viscosité (Pa.s) | 8 ± 2 | | | 14 ± 2 | | |
| | Epaisseur (µm) | 33 ± 2 | | | 24 ± 2 | | |
| Deuxième couche | Ferro 14501 (%) | 100 | | | | | |
| | Viscosité (Pa.s) | 13 ± 2 | | | | | |
| | Epaisseur (µm) | 35 ± 2 | | | 42 ± 2 | | |
| | Mesh | 90.40 | | | 55.64 | | |

Pour chacun des exemples, une feuille de verre a été émaillée par le dépôt par sérigraphie des première et deuxième couches décrites dans le tableau 1 ci-dessus. Dans le cas des exemples 3 et 6, un mélange homogène des pigments a été réalisé avant le dépôt.

Un écran comprenant 68 fils par centimètre et dont le diamètre des fils est de 55 µm a été utilisé pour le dépôt de la première couche.

Un écran comprenant 90 fils par centimètre et dont le diamètre des fils est de 40 µm a été utilisé pour le dépôt de la deuxième couche pour les exemples 1 à 3.

Un écran comprenant 55 fils centimètre et dont le diamètre des fils est de 64 µm a été utilisé pour le dépôt de la deuxième couche pour les exemples 4 à 6.

Il est à noter que les mesures d'épaisseurs et de viscosité indiquées dans le tableau 1 ci-dessus ont été réalisées avant l'étape de cuisson.

Après les dépôts, un temps de séchage de 2 minutes à 150 °C a été respecté. Puis, les feuilles de verre portant les deux couches ont subi une étape de cuisson à 650 °C pendant 180 secondes.

L'étape de cuisson est menée dans un four à convection reproduisant les conditions d'un procédé industriel pour la production de verre destiné à l'industrie automobile. Il a été observé que ces conditions permettent toujours d'obtenir l'effet « seamless » recherché.

Les échantillons obtenus ont également été bombés. Il a été observé que le bombage n'a aucune influence sur les matériaux permettant d'obtenir un effet dichroïque. Ledit effet est donc toujours bien obtenu.

Le spectre de réflexion de l'exemple 1 ainsi que sa luminosité (L*) ont été mesurés pour différents angles à l'aide d'un spectrophotomètre (Lambda 1050) utilisant le module « Total Absolute Measurement System » (TAMS) permettant la rotation et l'acquisition de données simultanées. Ces mesures sont présentées dans le Tableau 2 ci-après.

**[Tableau 2]**

| | -75° | -60° | -45° | -30° | -15° | 15° | 30° | 45° | 60° | 75° |
|---|---|---|---|---|---|---|---|---|---|---|
| RL (%) | 27.62 | 10.25 | 6.01 | 5.08 | 4.97 | 4.98 | 5.06 | 5.89 | 9.75 | 25.61 |
| L* | 59.54 | 38.28 | 29.43 | 26.96 | 26.65 | 26.66 | 26.91 | 19.14 | 37.39 | 57.67 |
| a* | 0.09 | 0.35 | 0.07 | -0.84 | -1.44 | -1.52 | -0.9 | 0.05 | 0.33 | 0.06 |
| b* | 0.2 | -0.4 | -1.29 | -1.6 | -1.35 | -1.52 | -1.61 | -1.36 | -0.57 | -0.08 |

La luminosité (L*) varie de noir (0) à blanc (100) tandis que a* représente une coloration allant du vert (négatif) au rouge (positif) et que b* représente une coloration allant du bleu (négatif) au jaune (positif).

Le tableau 2 illustre la nette variation de couleur et de luminosité de l'échantillon en fonction de l'angle d'observation de celui-ci. Il est en outre important de rappeler qu'en conditions d'utilisation réelle, cette variation serait encore plus importante car l'angle d'observation pourrait alors varier selon plus d'une direction.

Il apparaît donc qu'un article verrier selon l'invention permet de couvrir une large gamme de colorations et ainsi est susceptible de s'accorder avec un élément de carrosserie d'un véhicule.

Les inventeurs ont également noté que le mélange de deux pigments dichroïques, tel que dans les exemples 3 et 6 ci-dessous, permet d'obtenir un nombre encore plus élevé de colorations sur un même substrat verrier, par rapport, respectivement aux exemples 1-2 et 3-4.

## Revendications

1. Article verrier comprenant :
• un substrat de verre,
• une première couche recouvrant au moins partiellement le substrat de verre et comprenant au moins un pigment choisi parmi les pigments dichroïques et les pigments métalliques,
la première couche comprenant de 5 % à 15 % en poids de pigment(s) choisi(s) parmi les pigments métalliques et dichroïques, par rapport au poids total de la première couche, et
• une deuxième couche recouvrant au moins partiellement le substrat de verre, recouvrant sensiblement toute la surface de la première couche et comprenant au moins un pigment noir.

2. Article verrier selon la revendication précédente, dans lequel l'au moins un pigment compris dans la première couche est choisi parmi les pigments dichroïques.

3. Article verrier selon l'une quelconque des revendications précédentes, dans lequel la première couche comprend un mélange de pigments dichroïques et de pigments métalliques.

4. Article verrier selon l'une quelconque des revendications précédentes, dans lequel la première couche est tramée.

5. Article verrier selon l'une quelconque des revendications précédentes, dans lequel les première et deuxième couches ont une épaisseur comprise de 1 µm à 100 µm, en particulier de 10 µm à 80 µm et de préférence de 15 µm à 50 µm.

6. Article verrier selon l'une quelconque des revendications précédentes, dans lequel les première et deuxième couches comprennent en outre une fritte de verre.

7. Article verrier selon l'une quelconque des revendications précédentes, dans lequel la première couche comprend de 7 % à 13 % en poids ; et de préférence 10% en poids de pigment(s) choisi(s) parmi les pigments métalliques et dichroïques, par rapport au poids total de la première couche.

8. Article verrier selon l'une quelconque des revendications précédentes, dans lequel le substrat de verre est une feuille de verre minéral, éventuellement trempée thermiquement ou renforcée chimiquement, en particulier choisie parmi les feuilles de verre flotté, sodocalcique, aluminosilicate et borosilicate, de préférence est une feuille de verre silico-sodo-calcique.

9. Article verrier selon l'une quelconque des revendications précédentes, dans lequel aucune couche optiquement active n'est comprise entre le substrat de verre et la première couche, ou lorsque la deuxième couche est au contact du substrat de verre, entre le substrat de verre et la deuxième couche.

10. Procédé d'obtention d'un article verrier selon l'une quelconque des revendications précédentes, comprenant :
• une étape d'impression de la première couche sur le substrat de verre, et
• une étape d'impression de la deuxième couche sur la première couche et le substrat de verre.

11. Procédé selon la revendication précédente, **caractérisé en ce que** les étapes d'impression sont réalisées par sérigraphie et/ou par impression digitale.

12. Vitrage automobile, **caractérisé en ce qu'**il comprend un article verrier selon l'une quelconque des revendications 1 à 9.

13. Vitrage automobile selon la revendication précédente, ledit vitrage étant feuilleté ou trempé.

14. Vitrage automobile selon la revendication précédente, dans lequel les première et deuxième couches sont disposées sur la face intérieure.

15. Vitrage automobile selon l'une quelconque des revendications 12 à 14, ledit vitrage étant bombé.

## Patentansprüche

1. Glasartikel, umfassend:
• ein Glassubstrat,
• eine erste Schicht, die das Glassubstrat zumindest teilweise bedeckt und mindestens ein Pigment enthält, das aus dichroitischen Pigmenten und metallischen Pigmenten ausgewählt ist,
wobei die erste Schicht bezogen auf das Gesamtgewicht der ersten Schicht 5 Gew.-% bis 15 Gew.-% Pigment(e), ausgewählt aus metallischen und dichroitischen Pigmenten, enthält, und
• eine zweite Schicht, die das Glassubstrat zumindest teilweise bedeckt, im Wesentlichen die gesamte Oberfläche der ersten Schicht bedeckt und mindestens ein schwarzes Pigment enthält.

2. Glasartikel nach dem vorstehenden Anspruch, wobei mindestens ein in der ersten Schicht enthaltenes Pigment aus dichroitischen Pigmenten ausgewählt ist.

3. Glasartikel nach einem der vorstehenden Ansprüche, wobei die erste Schicht ein Gemisch aus dichroitischen Pigmenten und metallischen Pigmenten enthält.

4. Glasartikel nach einem der vorstehenden Ansprüche, wobei die erste Schicht gerastert ist.

5. Glasartikel nach einem der vorstehenden Ansprüche, wobei die erste und zweite Schicht eine Dicke im Bereich von 1 µm bis 100 µm, insbesondere von 10 µm bis 80 µm und vorzugsweise von 15 µm bis 50 µm aufweisen.

6. Glasartikel nach einem der vorstehenden Ansprüche, wobei die erste und zweite Schicht ferner eine Glasfritte enthalten.

7. Glasartikel nach einem der vorstehenden Ansprüche, wobei die erste Schicht bezogen auf das Gesamtgewicht der ersten Schicht 7 Gew.-% bis 13 Gew.-% und vorzugsweise 10 Gew.-% Pigment(e), ausgewählt aus metallischen und dichroitischen Pigmenten, enthält.

8. Glasartikel nach einem der vorstehenden Ansprüche, wobei das Glassubstrat eine gegebenenfalls thermisch vorgespannte oder chemisch gehärtete, insbesondere aus Floatglas, Kalknatronglas, Aluminosilikatglas und Borosilikatglas, vorzugsweise eine Kalknatronsilikatglasscheibe, ausgewählte Mineralglasscheibe ist.

9. Glasartikel nach einem der vorstehenden Ansprüche, wobei zwischen dem Glassubstrat und der ersten Schicht beziehungsweise, wenn die zweite Schicht mit dem Glassubstrat in Kontakt steht, zwischen dem Glassubstrat und der zweiten Schicht keine optisch aktive Schicht vorhanden ist.

10. Verfahren zum Erhalten eines Glasartikels nach einem der vorstehenden Ansprüche, umfassend:
• einen Schritt des Druckens der ersten Schicht auf das Glassubstrat und
• einen Schritt des Druckens der zweiten Schicht auf die erste Schicht und das Glassubstrat.

11. Verfahren nach dem vorstehenden Anspruch,
**dadurch gekennzeichnet, dass** die Schritte des Druckens als Siebdruck und/oder Digitaldruck ausgeführt werden.

12. Kraftfahrzeugverglasung, **dadurch gekennzeichnet, dass** sie einen Glasartikel nach einem der Ansprüche 1 bis 9 umfasst.

13. Kraftfahrzeugverglasung nach dem vorstehenden Anspruch, wobei es sich bei der Verglasung um Verbund- oder vorgespanntes Sicherheitsglas handelt.

14. Kraftfahrzeugverglasung nach dem vorstehenden Anspruch, wobei die erste und zweite Schicht auf der Innenseite angeordnet sind.

15. Kraftfahrzeugverglasung nach einem der Ansprüche 12 bis 14, wobei die Verglasung gewölbt ist.

## Claims

1. A glass article comprising:
• a glass substrate,
• a first layer at least partially covering the glass substrate and comprising at least one pigment selected from dichroic pigments and metal pigments, the first layer comprising from 5% to 15% by weight of pigment chosen from metallic and dichroic pigments, relative to the total weight of the first layer, and
• a second layer at least partially covering the glass substrate, substantially covering the entire surface of the first layer and comprising at least one black pigment.

2. The glass article according to the preceding claim, wherein the at least one pigment comprised in the first layer is chosen from dichroic pigments.

3. The glass article according to any one of the preceding claims, wherein the first layer comprises a mixture of dichroic pigments and metal pigments.

4. The glass article according to any one of the preceding claims, wherein the first layer is screened.

5. The glass article according to any one of the preceding claims, wherein the first and second layers have a thickness of from 1 µm to 100 µm, in particular from 10 µm to 80 µm and preferably from 15 µm to 50 µm.

6. The glass article according to any one of the preceding claims, wherein the first and second layers further comprise a glass frit.

7. The glass article according to any one of the preceding claims, wherein the first layer comprises from 7% to 13% by weight; and preferably 10% by weight of pigment chosen from metallic and dichroic pigments, relative to the total weight of the first layer.

8. The glass article according to any one of the preceding claims, wherein the glass substrate is a sheet of mineral glass, optionally thermally tempered or chemically reinforced, in particular chosen from sheets of float glass, soda-lime-silica glass, aluminosilicate and borosilicate glass, and preferably is a sheet of soda-lime-silica glass.

9. The glass article according to any one of the preceding claims, wherein no optically active layer is included between the glass substrate and the first layer, or when the second layer is in contact with the glass substrate, between the glass substrate and the second layer.

10. A method for obtaining a glass article according to any one of the preceding claims, comprising:
• a step of printing the first layer on the glass substrate, and
• a step of printing the second layer on the first layer and the glass substrate.

11. The method according to the preceding claim, **characterized in that** the printing steps are carried out by screen printing and/or by digital printing.

12. An automotive glazing, **characterized in that** it comprises a glass article according to any one of claims 1 to 9.

13. The automotive glazing according to the preceding claim, said glazing being laminated or tempered.

14. The automotive glazing according to the preceding claim, wherein the first and second layers are arranged on the interior face.

15. The automotive glazing according to any one of claims 12 to 14, said glazing being curved.
